(19) Europäisches Patentamt
European Patent Office
Office européen des brevets

(11) EP 2 527 651 A2

(12) EUROPEAN PATENT APPLICATION

(43) Date of publication:
28.11.2012 Bulletin 2012/48

(51) Int Cl.:
F03D 11/00 (2006.01)

(21) Application number: 12169611.6

(22) Date of filing: 25.05.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.05.2011 CN 201110141198

(71) Applicant: General Electric Company
Schenectady, NY 12345 (US)

(72) Inventors:
• Fu, Xu
Niskayuna, NY New York 12309 (US)
• Qiu, Hai
Niskayuna, NY New York 12309 (US)
• Chen, Yao
Shanghai (CN)
• Hu, John Zhongzhi
Nanjing (CN)
• Cai, Zili
Niskayuna, NY New York 12309 (US)

(74) Representative: Bedford, Grant Richard
Global Patent Operation - Europe
GE International Inc.
15 John Adam Street
London WC2N 6LU (GB)

(54) Wind Turbine and Method for Determining Parameters of Wind Turbine

(57) A wind turbine 10 includes multiple blades 12, multiple Micro Inertial Measurement Units (MIMUs) 18 mounted on each of the blades and sensing parameter signals of the blades 12 , and a parameter processing unit receiving sensed parameter signals from the MIMUs 18 and determining parameters of the blades 12 according to the sensed parameter signals.

FIG. 1

EP 2 527 651 A2

**Description**

Wind turbines are complex machines, which convert kinetic energy in wind into electrical power energy. When a wind turbine is operated, some parameters of the wind turbine, such as blade pitch, blade rotating speed, yaw, rotor speed, generator speed, and structural vibration, need to be monitored for controlling the wind turbine be more reliable.

In order to monitor the parameters of the wind turbine, different kinds of sensors are mounted to the wind turbine. For example, a rotary encoder is used to detect the blade pitch, blade rotating speed, yaw, rotor speed, and generator speed; an accelerometer is used to monitor the wind turbine vibration; while other sensors, such as ultrasonic sensors, laser sensors, radar sensors, are used to measure other kinds of parameters. Thus, numerous kinds of sensors or meters need to be installed on the wind turbine to monitor the various parameters, which makes the wind turbine be very complicated and very expensive.

Furthermore, the conventional wind turbine can only monitor limited parameters. Parameters, such as torque, thrust, blade bending moment, blade twisting moment, tip displacement, tower bending moment, and three-dimensional motion track, cannot be monitored.

For these and other reasons, there is a need for embodiments of the invention.

According to various aspects of the present invention, a wind turbine and method are provided that includes a plurality of blades where each blade includes a plurality of Micro Inertial Measurement Units (MIMUs) to sense parameter signals of the blades. A parameter processing unit receives the sensed parameter signals from the MIMUs and determines parameters of the blades according to the sensed parameter signals.

Various features and aspects of embodiments of the present invention will become better understood when the following detailed description is read with reference to the accompanying drawings in which like characters represent like parts throughout the drawings, wherein:

FIG. 1 is a schematic view of a wind turbine according to one embodiment.

FIG. 2 is a side view of the wind turbine of FIG. 1.

FIG. 3 is a block diagram of a parameter processing device according to an embodiment.

FIG. 4 is a flowchart of a method for determining parameters of a wind turbine according to one embodiment.

FIG. 5 is a schematic view of a wind turbine according to another embodiment.

Various embodiments of the invention relate to a wind turbine including multiple Micro Inertial Measurement Units (MIMUs) mounted at various locations of the wind turbine to monitor the status of the wind turbine. For example, MIMUs mounted on each of the blades of the wind turbine sense parameter signals of the blades, and supply these signals to a parameter processing unit. The parameter processing unit determines parameters of the blades according to the sensed parameter signals.

Unless defined otherwise, technical and scientific terms used herein have the same meaning as is commonly understood by one of ordinary skill in the art to which this invention belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items, and terms such as "front", "back", "bottom", and/or "top", unless otherwise noted, are merely used for convenience of description, and are not limited to any one position or spatial orientation. Moreover, the terms "coupled" and "connected" are not intended to distinguish between a direct or indirect coupling/connection between two components. Rather, such components may be directly or indirectly coupled/connected unless otherwise indicated.

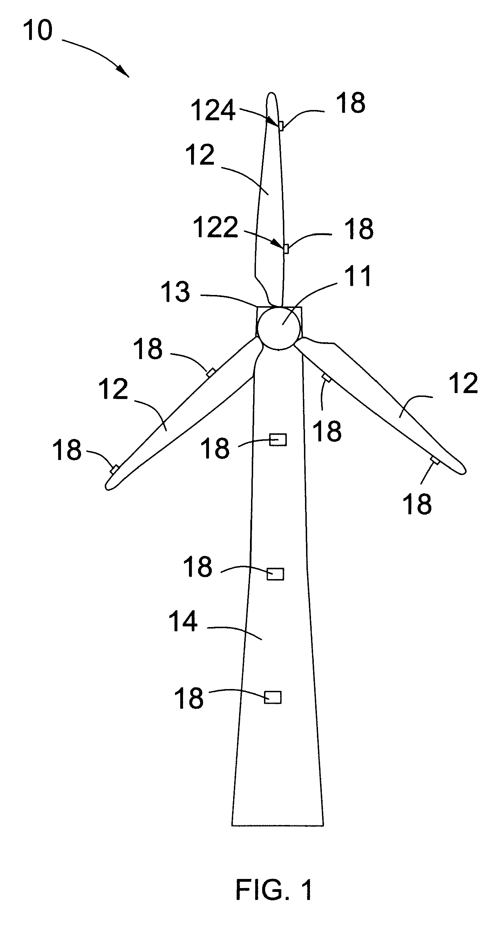

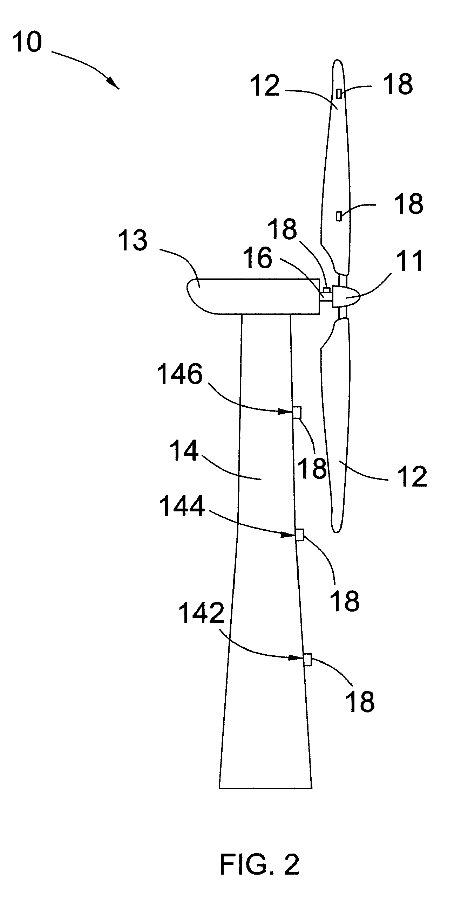

Referring to FIGs. 1 and 2, a wind turbine 10 according to one embodiment includes three blades 12, a tower 14, and a main shaft 16. The wind turbine 10 may also include a hub 11, a nacelle 13, a generator (not shown), and so on, which are conventional technology and, thus, not described here. In other embodiments, the number of the blades 12 may be two or more than three.

In the illustrated embodiment of FIGs. 1 and 2, each blade 12 includes two Micro Inertial Measurement Units (MIMUs) 18 respectively mounted on a root point 122 and a tip point 124 of the corresponding blade 12. The tower 14 comprises three MIMUs 18 respectively mounted on a base point 142, a middle point 144, and a top point 146 of the tower 14. The main shaft 16 comprises an MIMU 18 mounted thereon.

In the illustrated embodiment of FIG. 1, the MIMUs 18 are mounted on external walls of the blades 12, the tower 14, and the main shaft 16. In other embodiments, the MIMUs 18 can be mounted on inner walls of the blades 12, the tower 14, and the main shaft 16, or the MIMUs 18 can be embedded in the walls thereof according to requirements. In other embodiments, the number and the mounted position of the MIMUs 18 can be adjusted according to requirements of desired application or for desired results. For example, each blade 12 can include three or more MIMUs 18 mounted at different positions of the corresponding blades 12. In other embodiments, other parts of the wind turbine 10, such as the hub 11 and the nacelle 13 also include MIMUs 18 to provide parameter signals as necessary.

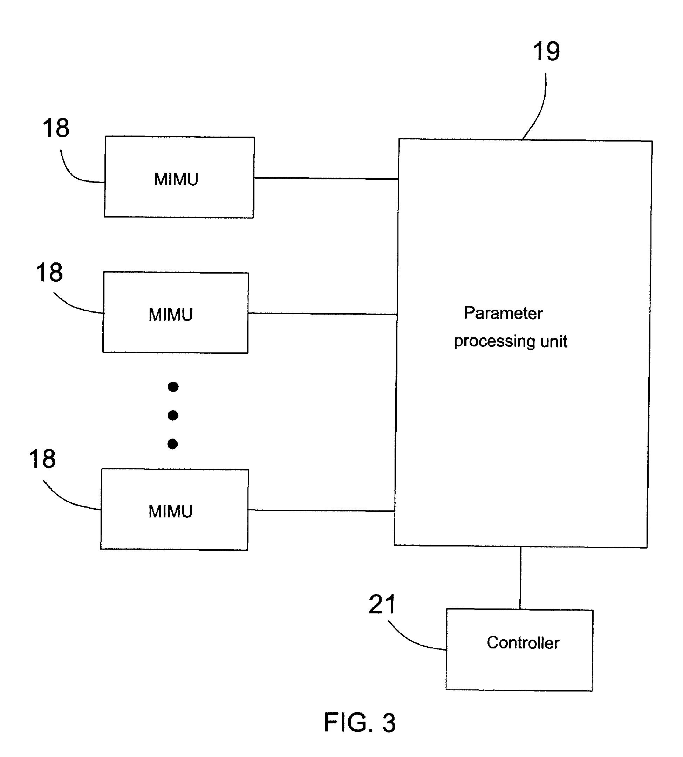

Referring to FIG. 3, the wind turbine 10 further includes a parameter processing unit 19 coupled to all of the MIMUs 18. The parameter process unit 19 may be arranged in the tower 14, the nacelle 13, or in another location according to requirements. The communication mode between the parameter processing unit 19 and the MIMUs 18 can be wireless communication mode or cable communication mode. For example, the MIMUs 18 may be respectively coupled to first wireless transceivers, and the parameter processing unit 19 may be coupled to a second wireless transceiver, thus the MIMUs 18 can communicate with the parameter processing 19 through the first and second wireless transceivers. In one embodiment, the parameter processing unit 19 may be a computer system or a microprocessor system, for example. The parameter processing unit 19 is also coupled to a controller 21 used to receive the parameter signals from the parameter processing unit 19 and control the wind turbine 10 accordingly. In other embodiments, the parameter processing unit 19 and the controller 21 can be integrated as necessary.

The MIMUs 18 are used to sense parameter signals of the corresponding mounted position of the wind turbine 10. The MIMU is a comprehensive motion capture sensing apparatus, which can sense three dimensional (3D) orientation (pitch, roll, yaw) signals, as well as 3D acceleration signals, 3D rate of turn signals, 3D magnetic field signals, and other related parameter signals in real time according to different kinds of MIMUs. In certain embodiments, the MIMU 18 may include a 3D accelerometer, a 3D gyroscope, and a 3D magnetometer at the same time, or include two kinds of them, or include one kind of them. The parameter processing unit 19 receives the sensed parameter signals from all of the MIMUs 18 and determines parameters of the wind turbine 10 by implementing an embedded model-based estimation program therein.

According to an embodiment, the determined parameters can include blade pitch, blade rotating speed, structural vibration, blade bending moment, blade twisting moment, tip displacement, three dimensional motion track, tower bending moment, yaw, rotor speed, generator speed, torque, thrust, and load. Each MIMU 18 can sense different types of parameter signals, such as 3D rate of turn signals ($W_x$, $W_y$, $W_z$), 3D acceleration signals ($a_x$, $a_y$, $a_z$), 3D earth magnetic field signals ($m_x$, $m_y$, $m_z$), and 3D orientation signals ($\theta$, $\gamma$, $\psi$), for example.

In detail, during the determining process, the above sensed parameter signals together with a coordinate parameter ($x_n$, $y_n$, $z_n$) of the corresponding MIMU 18 are processed into a vector $T_n$, where "n" stands for the number of MIMU 18. For example, "n" may be 1, 2, 3..., etc. The vector $T_n$ can be noted as the following equation:

$$T_n = [W_{x,n}\ \ W_{y,n}\ \ W_{z,n}\ \ a_{x,n}\ \ a_{y,n}\ \ a_{z,n}\ \ m_{x,n}\ \ m_{y,n}\ \ m_{z,n}\ \ \theta_n\ \ \gamma_n\ \ \psi_n\ \ x_n\ \ y_n\ \ z_n]$$

Furthermore, the sensed signals from all of the MIMUs 18 can be noted as a matrix S, whose row and column are equal to N and 15 respectively. Wherein, "N" stands for the total number of MIMUs 18, for example N=10. The matrix S can be noted as the following equation:

$$S = [T_1 \ldots T_2 \ldots T_N]^T$$

There is also a matrix So to denote the initial data of all parameter signals. The matrix So can be determined by processing the data into the matrix S when the wind turbine 10 is in a static status. Subsequently, the real time data in the matrix S and the initial data in the matrix So will be used to determine the mentioned parameters. In other embodiments, the parameters also can be determined by other algorithm processed by the parameter processing unit 19.

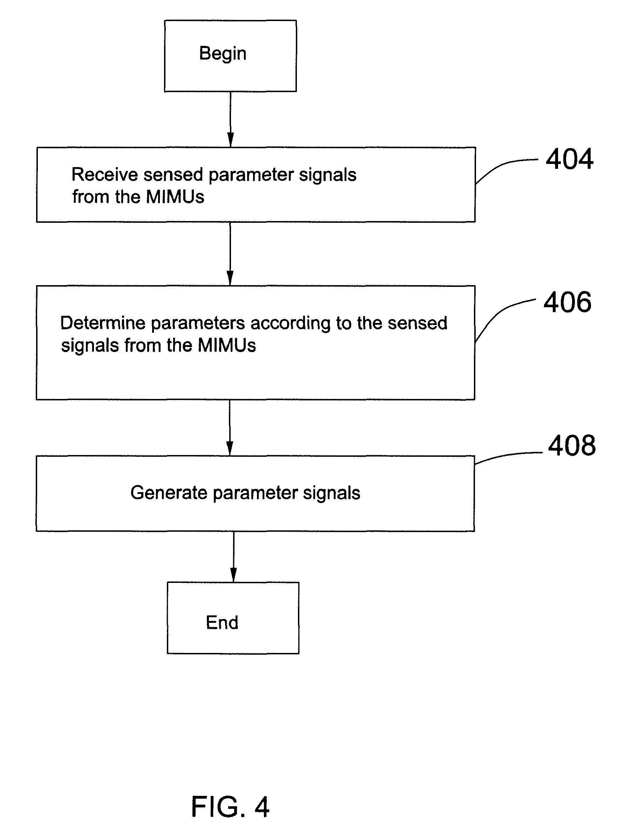

FIG. 4 is a flowchart of one embodiment of a process for determining parameters of the wind turbine 10. In step 404, the sensed parameter signals from the MIMUs 18 are received, for example by the parameter processing unit 19. The parameter processing unit 19 determines the parameters according to the sensed signals from the MIMUs 18 in step 406. In step 408, the parameter processing unit 19 generates parameter signals based on the sensed signals. The parameter signals are monitored by the control unit 21 to control the wind turbine 10 accordingly.

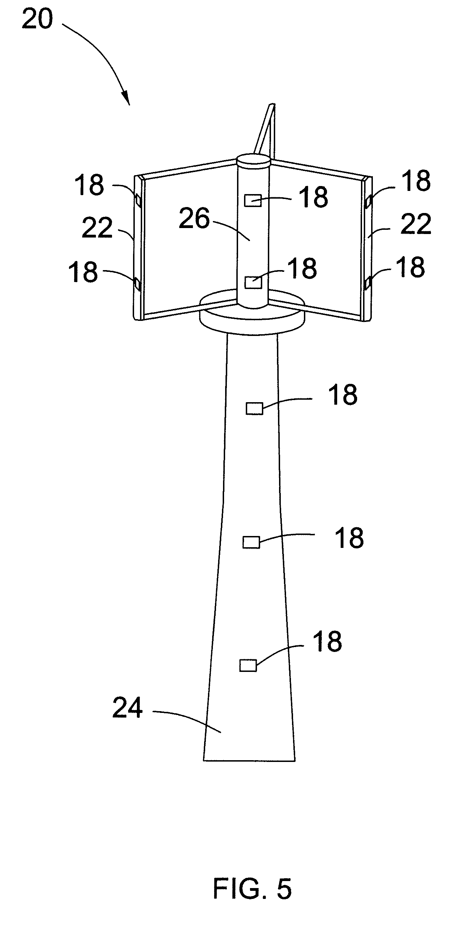

In FIGs. 1 and 2, the illustrated wind turbine 10 is a horizontal axis type wind turbine 10. However, embodiments of the invention can also be utilized in any other type of wind turbines. For example, FIG. 5 illustrates another type (vertical axis type) of wind turbine 20. The wind turbine 20 in this embodiment includes eleven MIMUs 18 mounted on different parts of the wind turbine 20. For example, each blade 22 includes two MIMUs 18, the tower 24 includes three MIMUs 18, and the main shaft 26 includes two MIMUs 18. The difference between the wind turbine 10 and the wind turbine 20 is the number and the mounted position of the MIMUs 18, which is decided by the type, size, or other characteristics of the wind turbines 10 and 20.

In the embodiments disclosed herein, MIMUs 18 are utilized to monitor different parameters of different parts of the wind turbines 10 and 20, which makes the parameter monitoring system simpler, cost efficient, and comprehensive.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:

1. A wind turbine, comprising:

a plurality of blades;

a plurality of Micro Inertial Measurement Units (MIMUs) mounted on each of the plurality of blades and sensing parameter signals of the plurality of blades; and

a parameter processing unit receiving the parameter signals from the MIMUs and determining parameters of the plurality of blades according to the received parameter signals.

2. The wind turbine of clause 1, wherein two MIMUs are respectively mounted on a root point and a tip point of the corresponding blade.

3. The wind turbine of any preceding clause, wherein the parameters determined by the parameter processing unit comprises at least one of blade pitch, blade rotating speed, structural vibration, blade bending moment, blade twisting moment, tip displacement, and three dimensional motion track.

4. The wind turbine of any preceding clause, further comprising:

a tower; and

a plurality of MIMUs mounted on the tower and sensing parameter signals of the tower;

wherein the parameter processing unit further receives sensed parameter signals from the plurality of MIMUs mounted on the tower and determines parameters of the tower according to the received parameter signals from the plurality of MIMUs mounted on the tower.

5. The wind turbine of any preceding clause, wherein three MIMUs are respectively mounted on a base point, a middle point, and a top point of the tower.

6. The wind turbine of any preceding clause, wherein the parameters determined by the parameter processing unit comprises at least one of blade pitch, blade rotating speed, structural vibration, blade bending moment, blade twisting moment, tip displacement, three dimensional motion track, and tower bending moment.

7. The wind turbine of any preceding clause, further comprising:

a rotor comprising a shaft; and

a MIMU mounted on the shaft and sensing parameter signals of the shaft;

wherein the parameter processing unit further receives sensed parameter signals from the MIMU mounted on the shaft and determines parameters of the shaft according to the received parameter signals from the MIMU mounted on the shaft.

8. The wind turbine of any preceding clause, wherein the parameters determined by the parameter processing unit comprises at least one of blade pitch, blade rotating speed, structural vibration, blade bending moment, blade twisting moment, tip displacement, three dimensional motion track, tower bending moment, yaw, rotor speed, generator speed, torque, thrust, and load.

9. The wind turbine of any preceding clause, further comprising:

a rotor comprising a shaft; and

a MIMU mounted on the shaft and sensing parameter signals of the shaft;

wherein the parameter processing unit further receives sensed parameter signals from the MIMU mounted on the shaft and determines parameters of the shaft according to the received parameter signals from the MIMU mounted on the shaft.

10. The wind turbine of any preceding clause, wherein the parameters determined by the parameter processing unit comprises at least one of blade pitch, blade rotating speed, structural vibration, blade bending moment, blade twisting moment, tip displacement, three dimensional motion track, yaw, rotor speed, generator speed, torque, and thrust.

11. A method for determining parameters of a wind turbine, comprising:

receiving sensed signals from Micro Inertial Measurement Units (MIMUs) mounted on each blade of the wind turbine; and

determining parameters according to the sensed signals from the MIMUs.

12. The method of any preceding clause, wherein receiving sensed signals comprises receiving sensed signals from two MIMUs respectively mounted on a root point and a tip point of the corresponding blade.

13. The method of any preceding clause, wherein determining parameters according to the sensed signals from the MIMUs comprises determining at least one of blade pitch, blade rotating speed, structural vibration, blade bending moment, blade twisting moment, tip displacement, and three dimensional motion track.

14. The method of any preceding clause, further comprising:

receiving sensed signals from a plurality of MIMUs mounted on a tower of the wind turbine; and

determining parameters according to the sensed signals from the plurality of MIMU mounted on the tower.

15. The method of any preceding clause, wherein receiving sensed signals comprises receiving sensed signals from three MIMUs respectively mounted on a base point, a middle point, and a top point of the tower.

16. The method of any preceding clause, wherein determining parameters according to the sensed signals from the plurality of MIMUs mounted on the tower comprises determining at least one of blade pitch, blade rotating speed, structural vibration, blade bending moment, blade twisting moment, tip displacement, three dimensional motion track, and tower bending moment.

17. The method of any preceding clause, further comprising:

receiving sensed signals from an MIMU mounted on a shaft of the wind turbine; and

determining parameters according to the sensed signals from the MIMU mounted on the shaft.

18. The method of any preceding clause, wherein determining parameters according to the sensed signals from the MIMU mounted on the shaft comprises determining at least one of blade pitch, blade rotating speed, structural vibration, blade bending moment, blade twisting moment, tip displacement, three dimensional motion track, tower bending moment, yaw, rotor speed, generator speed, torque, thrust, and load.

19. The method of any preceding clause, further comprising:

receiving sensed signals from a MIMU mounted on a shaft of a rotor of the wind turbine; and

determining parameters according to the sensed signals from the MIMU mounted on the shaft.

20. The method of any preceding clause, wherein determining parameters according to the sensed signals from the MIMU mounted on the shaft comprises determining at least one of blade pitch, blade rotating speed, structural vibration, blade bending moment, blade twisting moment, tip displacement, three dimensional motion track, yaw, rotor speed, generator speed, torque, and thrust.

**Claims**

1. A wind turbine (10), comprising:

   a plurality of blades (12);
   a plurality of Micro Inertial Measurement Units (MIMUs) (18) mounted on each of the plurality of blades and sensing parameter signals of the plurality of blades; and
   a parameter processing unit (19) receiving the parameter signals from the MIMUs (18) and determining parameters of the plurality of blades according to the received parameter signals.

2. The wind turbine (10) of claim 1, wherein two MIMUs (18) are respectively mounted on a root point and a tip point of the corresponding blade (12).

3. The wind turbine (10) of any preceding claim, wherein the parameters determined by the parameter processing unit (19) comprises at least one of blade pitch, blade rotating speed, structural vibration, blade bending moment, blade twisting moment, tip displacement, and three dimensional motion track.

4. The wind turbine (10) of any preceding claim, further comprising:

   a tower (14); and
   a plurality of MIMUs (18) mounted on the tower (14) and sensing parameter signals of the tower;
   wherein the parameter processing unit (19) further receives sensed parameter signals from the plurality of MIMUs mounted on the tower and determines parameters of the tower according to the received parameter signals from the plurality of MIMUs mounted on the tower.

5. The wind turbine (10) of claim 4, wherein three MIMUs (18) are respectively mounted on a base point, a middle point, and a top point of the tower (14).

6. The wind turbine (10) of any preceding claim, wherein the parameters determined by the parameter processing unit (19) comprises at least one of blade pitch, blade rotating speed, structural vibration, blade bending moment, blade twisting moment, tip displacement, three dimensional motion track, and tower bending moment.

7. The wind turbine (10) of any preceding claim, further comprising:

   a rotor (11) comprising a shaft; and
   a MIMU (18) mounted on the shaft and sensing parameter signals of the shaft;
   wherein the parameter processing unit (19) further receives sensed parameter signals from the MIMU mounted on the shaft and determines parameters of the shaft according to the received parameter signals from the MIMU mounted on the shaft.

8. The wind turbine (10) of any preceding claim, wherein the parameters determined by the parameter processing unit (19) comprises at least one of blade pitch, blade rotating speed, structural vibration, blade bending moment, blade twisting moment, tip displacement, three dimensional motion track, tower bending moment, yaw, rotor speed, generator speed, torque, thrust, and load.

9. The wind turbine (10) of any preceding claim, further comprising:

   a rotor (12) comprising a shaft; and

a MIMU (18) mounted on the shaft and sensing parameter signals of the shaft;
wherein the parameter processing unit (19) further receives sensed parameter signals from the MIMU mounted on the shaft and determines parameters of the shaft according to the received parameter signals from the MIMU mounted on the shaft.

10. The wind turbine (10) of any preceding claim, wherein the parameters determined by the parameter processing unit (19) comprises at least one of blade pitch, blade rotating speed, structural vibration, blade bending moment, blade twisting moment, tip displacement, three dimensional motion track, yaw, rotor speed, generator speed, torque, and thrust.

11. A method for determining parameters of a wind turbine (10), comprising:

receiving sensed signals from Micro Inertial Measurement Units (MIMUs) (18) mounted on each blade (12) of the wind turbine (10); and
determining parameters according to the sensed signals from the MIMUs.

12. The method of claim 11, wherein receiving sensed signals comprises receiving sensed signals from two MIMUs (18) respectively mounted on a root point and a tip point of the corresponding blade (12).

13. The method of claim 11 or claim 12, wherein determining parameters according to the sensed signals from the MIMUs (18) comprises determining at least one of blade pitch, blade rotating speed, structural vibration, blade bending moment, blade twisting moment, tip displacement, and three dimensional motion track.

14. The method of any of claims 11 to 13, further comprising:

receiving sensed signals from a plurality of MIMUs (18) mounted on a tower (14) of the wind turbine (10); and
determining parameters according to the sensed signals from the plurality of MIMUs (18) mounted on the tower (14).

15. The method of claim 14, wherein receiving sensed signals comprises receiving sensed signals from three MIMUs (18) respectively mounted on a base point, a middle point, and a top point of the tower (14).

10

124   18

12

122   18

13   11

18

12   12

18

18   18

18

18

14

18

FIG. 1

FIG. 2

FIG. 3

Begin

Receive sensed parameter signals
from the MIMUs — 404

Determine parameters according to the sensed
signals from the MIMUs — 406

Generate parameter signals — 408

End

FIG. 4

20

18          18          18

18          18

22          22

26

18          18

18          18

18

18

18

24

# FIG. 5